# EUROPEAN PATENT APPLICATION

(11) **EP 4 835 653 A1**
(43) Date of publication of application: **04.11.2026**
(21) Application number: 24909499.6
(22) Date of filing: 14.05.2024
(51) Int. Cl.: G06F 9/451

(54) **VIDEO PLAYBACK METHOD AND APPARATUS, AND ELECTRONIC DEVICE**

(30) Priority: 29.12.2023 CN 202311856865
(71) Applicant: Zhejiang Uniview Technologies Co., Ltd., Hangzhou, Zhejiang 310051 (CN)
(72) Inventor: JIN, Jing, Hangzhou, Zhejiang 310051 (CN); CUI, Yuxuan, Hangzhou, Zhejiang 310051 (CN)
(74) Representative: De Ros, Alberto
(86) International application number: PCT/CN2024/093063
(87) International publication number: WO 2025/138532

(57) **Abstract**

The present application provides a video playback method and apparatus, and an electronic device. The method comprises: determining the size of a video playback window and the video resolutions respectively captured by at least two camera devices for playing back videos by means of the video playback window; on the basis of the video resolutions respectively captured by the at least two camera devices and the size of the video playback window, determining, from the video playback window, respective pane areas of the at least two camera devices; and playing back, in each pane area, a video filmed by a corresponding camera device.

## Description

### CROSS-REFERENCES TO RELATED APPLICATIONS

The present application claims priority to Chinese Patent Application No. 2023118568653, filed on December 29, 2023, entitled "Video Playback Method and Apparatus", which is incorporated herein by reference in its entirety.

### FIELD

The present application relates to a field of video display technology, and in particular to a video play method and apparatus, and an electronic device.

### BACKGROUND

A video play system supports multi-channel video play, i.e., footages captured by multiple cameras are played simultaneously in a single video play window.

A function of multi-channel video play requires splitting the video play window to determine a corresponding play area for each camera device so as to conduct the play. Currently, screen splitting primarily involves evenly or fixedly dividing the video play window. However, such method of splitting the video play window results in low matching between the video and a corresponding play area, leading to poor play quality.

### BRIEF SUMMARY

The present application provides a video play method and apparatus, and an electronic device to solve the problem of poor play effect caused by low matching degree between a video and a corresponding play area.

The present application provides a video play method, including:
determining a size of a video play window and video resolutions respectively captured by at least two camera devices for playing videos by means of the video play window;
on the basis of the video resolutions respectively captured by the at least two camera devices and the size of the video play window, determining, from the video play window, respective pane areas of the at least two camera devices; and
playing, in each pane area, a video captured by a corresponding camera device.

The present application provides a video play apparatus, including:
a determining module configured to determine a size of a video play window and video resolutions respectively captured by at least two camera devices for playing videos by means of the video play window;
a processing module configured to, on the basis of the video resolutions respectively captured by the at least two camera devices and the size of the video play window, determine, from the video play window, respective pane areas of the at least two camera devices; and
a play module configured to play, in each pane area, a video captured by a corresponding camera device.

The present application provides an electronic device, including a memory, a processor, and a computer program stored in the memory and executable on the processor, where the processor, when executing the program, implements the video play method.

The video play method and apparatus, and electronic device provided by the present application first determines a size of a video play window and video resolutions respectively captured by at least two camera devices for playing videos by means of the video play window, then on the basis of the video resolutions respectively captured by the at least two camera devices and the size of the video play window, determines, from the video play window, respective pane areas of the at least two camera devices, and plays, in each pane area, a video captured by a corresponding camera device.

### BRIEF DESCRIPTION OF THE DRAWINGS

Accompanying drawings used in the following description of the embodiments are introduced. The drawings described below are some embodiments of the present application. For those skilled in the art, other drawings may be obtained on the basis of these drawings without creative efforts.
FIG. 1 is a comparative schematic diagram of two play methods in a corridor mode;
FIG. 2 is a flowchart of a video play method according to an embodiment of the present application;
FIG. 3 is a flowchart of determining a window pane area of a camera device according to an embodiment of the present application;
FIG. 4 is a flowchart of determining a window layout area of a first type camera device according to an embodiment of the present application;
FIG. 5 is a first schematic diagram of a window layout area according to an embodiment of the present application;
FIG. 6 is a second schematic diagram of a window layout area according to an embodiment of the present application;
FIG. 7 is a flowchart of determining a window layout area of a second type camera device according to an embodiment of the present application;
FIG. 8 is a schematic diagram of a layout area according to an embodiment of the present application;
FIG. 9 is a schematic diagram of stretching a window layout area of a first type camera device according to an embodiment of the present application;
FIG. 10 is a schematic diagram of determining a window layout area of a second type camera device according to an embodiment of the present application;
FIG. 11 is a schematic diagram of determining a window layout area of a seventh camera device according to an embodiment of the present application;
FIG. 12 is a structural schematic diagram of a video play apparatus according to an embodiment of the present application; and
FIG. 13 is a schematic diagram of a physical structure of an electronic device according to an embodiment of the present application.

### DETAILED DESCRIPTION

Technical solutions of the present application are described below with reference to the accompanying drawings. The described embodiments are some, but not all, of the embodiments of the present application.

First, basic concepts involved in the embodiments of the present application are introduced.

Full-scale play: a play ratio of a video is determined according to a size of a corresponding pane area, i.e., a live video image fills the entire pane area.

Proportional play: an aspect ratio of the corresponding pane area is ignored, and the play ratio of the video is on the basis of a ratio of an actual play channel.

In places such as airports, subways, and hospitals, due to a large number of installed camera devices, it is necessary to play videos captured by a plurality of camera devices in one video play window. In multi-channel video play scenarios, it is necessary to split the video play window. Currently, there are two main methods of screen splitting: the first is to uniformly or fixedly partition the video play window, and the second is to determine a layout of each video by cropping and stretching the video.

Uniform partitioning refers to dividing the video play window evenly into several equal pane areas for playing videos from different camera devices; fixed partitioning refers to pre-setting a partitioning method for the video play window, resulting in a fixed number of pane areas for playing videos from different camera devices. Therefore, neither uniform nor fixed partitioning can dynamically divide the pane areas when the video channels change, and a matching degree between the pane areas and the video is low. Furthermore, cropping and stretching the video would affect an original aspect ratio, leading to corresponding image distortion.

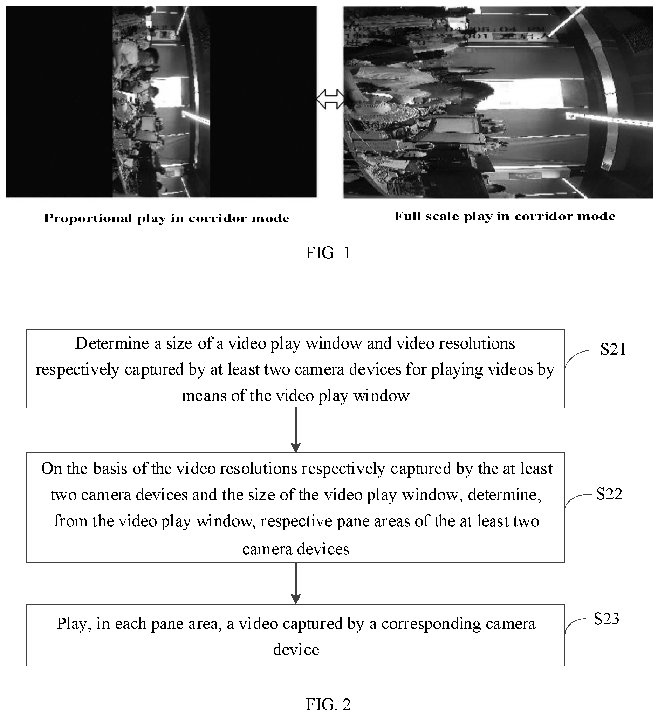

FIG. 1 is a comparative schematic diagram of two play methods in a corridor mode. As shown in FIG.1, taking video play in corridor mode as an example, due to a low matching degree between the pane area and the video, a utilization rate of the pane area is low when at proportional play, and the display image suffers severe distortion when at full-scale play.

Embodiments of the present application provide a video play method. In multi-channel video play scenarios, customized windowing is implemented on the basis of a resolution of a camera device to make the pane area more adapted with the video captured by the camera device, thereby improving an effect of video play. The solution of the present application embodiment is described below with reference to the accompanying drawings.

FIG. 2 is a flowchart of a video play method according to an embodiment of the present application. As shown in FIG.2, the method includes the following.

S21, determine a size of a video play window and video resolutions respectively captured by at least two camera devices for playing videos by means of the video play window.

The video play window is used to play videos captured by at least two camera devices. The size of the video play window may include a horizontal size and a vertical size of the video play window.

In some embodiments, when the video play window is a play window of a video play software, the size of the video play window may be determined on the basis of a display resolution of a corresponding video play device and an operating mode of the video play software. For example, the operating modes of the video play software include full-screen mode and bottom-down restore mode. In full-screen mode, the video play window fills a display interface of the video play device, so the size of the video play window may be obtained from the display resolution of the video play device. In bottom-down restore mode, the video play window does not fill the display interface of the video play device, so the size of the video play window needs to be determined by combining the display resolution of the video play device and the bottom-down restore mode.

The camera device is used to capture corresponding videos. The camera device may include, for example, fisheye cameras, pan-tilt-zoom (PTZ) cameras, quad-lens cameras, and bullet cameras, etc., and the present application embodiment does not limit thereto. During the capturing process, each camera device has a captured video resolution. The video resolution captured by the camera device may include a horizontal video resolution and a vertical video resolution. The horizontal video resolution indicates a number of pixels included in the video captured by the corresponding camera device in a horizontal direction, and the vertical video resolution indicates a number of pixels included in the video captured by the corresponding camera device in a vertical direction.

S22, on the basis of the video resolutions respectively captured by the at least two camera devices and the size of the video play window, determine, from the video play window, respective pane areas of the at least two camera devices.

After obtaining the video resolution captured by each camera device, the pane area of each camera device can be determined from the video play window on the basis of the video resolution captured by each camera device and the size of the video play window. For each camera device, the pane area is an area within the video play window used to play the captured video. Since the pane area of the camera device is determined on the basis of the video resolution captured by the camera device, the size of the pane area of the camera device is highly compatible with the video resolution captured by the camera device, which can improve the utilization rate of the video play window while ensuring that the image is not excessively distorted.

S23, play, in each pane area, a video captured by a corresponding camera device.

After determining the pane area of each camera device, the video captured by the corresponding camera device may be played in each pane area.

The video play method provided in the present application first determines the size of the video play window and the video resolutions respectively captured by at least two camera devices for playing the video by means of the video play window. Then, on the basis of the video resolutions respectively captured by the at least two camera devices and the size of the video play window, the respective pane areas of the at least two camera devices are determined from the video play window, and the video captured by the corresponding camera device is played back in each pane area. Since the pane area of each camera device is determined on the basis of the video resolution captured by the camera device combined with the size of the video play window, the video captured by the camera device can be more adapted to the pane area of the camera device, thereby improving the effect of video play.

On the basis of any of the above embodiments, the solutions of the embodiments of the present application are further described below with reference to the accompanying drawings.

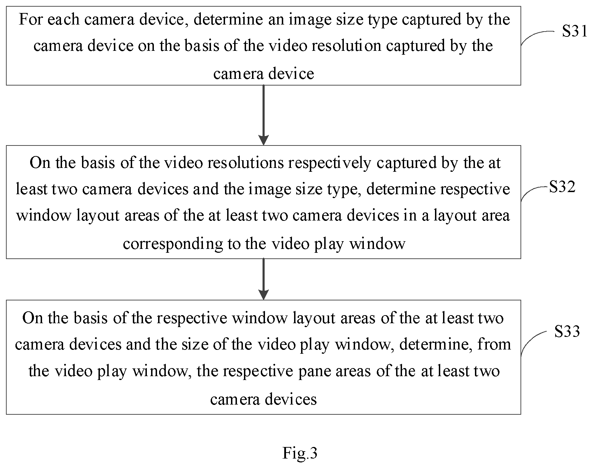

FIG. 3 is a flowchart of determining a window pane area of a camera device according to an embodiment of the present application. As shown in FIG.3, the method includes the following.

S31, for each camera device, determine an image size type captured by the camera device on the basis of the video resolution captured by the camera device.

After obtaining the video resolution captured by each camera device, the image size type captured by each camera device can be determined on the basis of a horizontal video resolution and a vertical video resolution captured by each camera device. Where, the image size type includes a first image size type and a second image size type. The first image size type is a type when the horizontal video resolution captured by the camera device is less than or equal to the vertical video resolution (referred to as type A in the following embodiments), and the second image size type is a type when the horizontal video resolution captured by the camera device is greater than the vertical video resolution (referred to as type B in the following embodiments); or the first image size type is type B, and the second image size type is type A.

For any camera device, after obtaining the video resolution captured by the camera device, the image size type of the video captured by that camera device may be determined by comparing the horizontal video resolution and the vertical video resolution captured by the camera device.

S32, on the basis of the video resolutions respectively captured by the at least two camera devices and the image size type, determine respective window layout areas of the at least two camera devices in a layout area corresponding to the video play window.

Each camera device may be classified on the basis of the image size type of each camera device. Where when at least two camera devices have an image size type of a first image size, it is classified as a first type camera device; and when at least two camera devices have an image size type of a second image size, it is classified as a second type camera device.

After classifying each camera device, the respective window layout areas of the at least two camera devices can be determined on the basis of the video resolutions respectively captured by the at least two camera devices and the type of the camera device.

In an embodiment, at least two camera devices include at least one first type camera device, which is a camera device that captures images of a first image size type. After obtaining the video resolution by the at least one first type camera device, the respective window layout areas of the at least one first type camera device is determined in the layout area, starting from a first position of the layout area corresponding to the video play window in a descending order of the vertical video resolution captured by the at least one first type camera device.

In the embodiments of the present application, the window layout area is arranged in a descending order of the vertical video resolution captured by at least one first type camera device, which facilitates a reasonable distribution of the display area of the camera device, reducing display deformation or distortion, and improving a display effect.

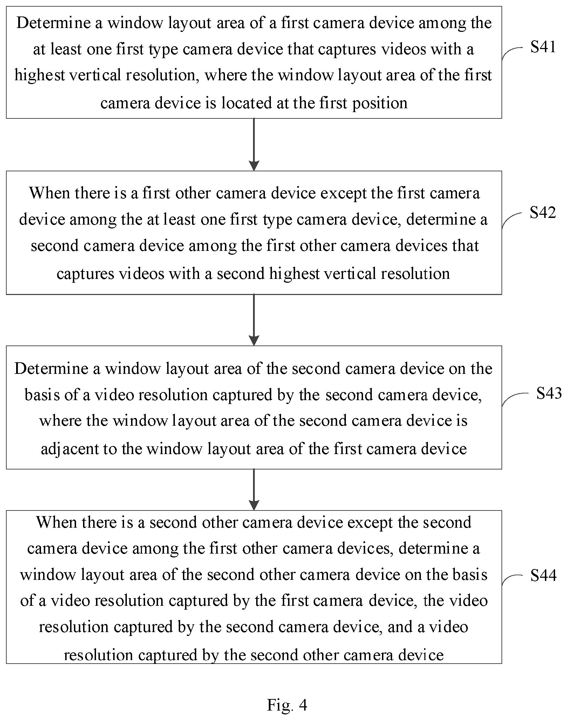

FIG. 4 is a flowchart of determining a window layout area of a first type camera device according to an embodiment of the present application. As shown in FIG.4, the method includes:

S41, determine a window layout area of a first camera device among the at least one first type camera device that captures videos with a highest vertical resolution, where the window layout area of the first camera device is located at the first position.

In the embodiments of the present application, the first type camera device may be either a type A camera device or a type B camera device. For ease of description, the following embodiments use a type A camera device as an example. Those skilled in the art shall understand that the method for determining a corresponding window layout area is similar when the first type camera device is a type B camera device.

First, the window layout area of the first camera device is determined. The first camera device is a camera device with a highest vertical video resolution captured in at least one first type camera device. The window layout area of the first camera device is located at a first position within the layout area corresponding to the video play window. The first position may be, for example, a leftmost position, a rightmost position, an upper left corner, an upper right corner, a lower left corner, a lower right corner, etc., of the layout area. The present application embodiment does not limit thereto.

A number of first camera devices may be one or more. When the number of first camera devices is one, the window layout area of the first camera device is set at the first position.

When there are a plurality of first camera devices, the window layout area of the first camera device with the highest vertical video resolution captured by the at least one first type camera device is determined in the following way: the respective window layout areas of the plurality of first camera devices is determined according to respective horizontal video resolutions of the plurality of first camera devices.

For example, the respective window layout areas of first camera device may be determined sequentially in the layout area, starting from the first position in the layout area, in a descending order of the respective horizontal video resolutions of the plurality of the first camera devices. For example, first camera device 1, first camera device 2, and first camera device 3 are included, where a horizontal video resolution of the first camera device 1 is greater than the horizontal video resolution of the first camera device 2, and a horizontal video resolution of the first camera device 2 is greater than the horizontal video resolution of the first camera device 3, then a window layout area of the first camera device 1 is located at the first position of the layout area, a window layout area of the first camera device 2 is adjacent to the first position, and a window layout area of the first camera device 3 is adjacent to the window layout area of the first camera device 2. The window layout area of any one of the plurality of first camera devices may be set in the first position, with the other first camera devices set adjacent to each other in sequence.

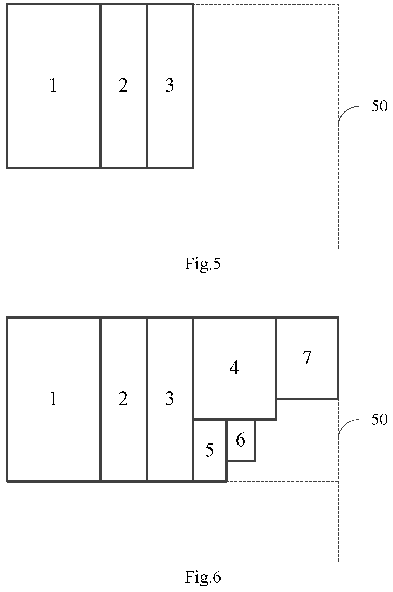

FIG. 5 is a first schematic diagram of a window layout area according to an embodiment of the present application. As shown in FIG.5, a dashed line illustrates a layout area 50 corresponding to the video play window. The layout area 50 includes a first layout area and a second layout area. The first layout area corresponds to the first image size type, and the second layout area corresponds to the second image size type. Among the type A camera devices, those with the highest vertical video resolutions captured are determined, include camera device 1, camera device 2, and camera device 3. Therefore, window layout areas of camera device 1, camera device 2, and camera device 3 may be determined first.

Taking a leftmost position of layout area 50 as an example, since vertical video resolutions captured by the camera device 1, the camera device 2, and the camera device 3 is equal, a window layout area of any one of these three camera devices may be set to the leftmost position of layout area 50. Then, window layout areas of the remaining two camera devices are set sequentially and adjacently.

In an embodiment, when the vertical video resolutions captured by the camera devices 1, 2, and 3 is equal, horizontal video resolutions captured by the camera devices 1, 2, and 3 may be compared, and then window layout areas of the camera devices 1, 2, and 3 may be determined on the basis of the horizontal video resolutions captured. For example, in FIG.5, if a descending order of the horizontal video resolutions captured by the camera devices 1, 2, and 3 is the camera device 1, the camera device 2 and the camera device 3, then the window layout area of the camera device 1 may be set at the leftmost side of the layout area 50, and the window layout area of the camera device 2 may be set adjacent to the window layout area of the camera device 1, and the window layout area of the camera device 3 may be set adjacent to the window layout area of the camera device 2.

S42, when there is a first other camera device except the first camera device among the at least one first type camera device, determine a second camera device among the first other camera devices that captures videos with a second highest vertical resolution.

After determining the window layout area of the first camera device, it is determined whether there is a first other camera device except the first camera device among at least one type of first camera device. If there is no first other camera device, the window layout areas of all first type camera devices have been determined; and if there is a first other camera device, a window layout area of the first other camera device needs to be further determined.

For example, when it is determined that there is a first other camera device, firstly, a second camera device with the second highest vertical video resolution is determined from among the first other camera devices, where a vertical video resolution captured by the second camera device is smaller than the vertical video resolution captured by the first camera device, but the second camera device is the camera device with the highest vertical video resolution among the first other camera devices.

S43, determine a window layout area of the second camera device on the basis of a video resolution captured by the second camera device, where the window layout area of the second camera device is adjacent to the window layout area of the first camera device.

After determining the second camera device, a window layout area of the second camera device may be obtained on the basis of the video resolution captured by the second camera device. The window layout area of the second camera device is adjacent to the window layout area of the first camera device, and a top of the window layout area of the second camera device is aligned with a top of the window layout area of the first camera device.

For example, referring to the example in FIG.6. FIG.6 is a second schematic diagram of the window layout area according to the embodiment of the present application. As shown in FIG.6, after determining the window layout areas of the camera device 1, the camera device 2, and the camera device 3 in the layout area 50, the camera device with the highest vertical video resolution captured is determined among the remaining A-type camera devices, namely camera device 4. Then, a window layout area of the camera device 4 is determined on the basis of the video resolution captured by the camera device 4. The window layout area of the camera device 4 is adjacent to the window layout area of the camera device 3.

S44, when there is a second other camera device except the second camera device among the first other camera devices, determine a window layout area of the second other camera device on the basis of a video resolution captured by the first camera device, the video resolution captured by the second camera device, and a video resolution captured by the second other camera device.

After determining the window layout area of the second camera device, it is necessary to further determine whether there are any second other camera devices except the second camera device among the first other camera devices. If not, the window layout areas of all the first type camera devices have been determined. If so, it is necessary to further determine window layout areas of the second other camera devices.

In the embodiment of the present application, the window layout areas of each camera device are arranged in a descending order of vertical video resolution. The window layout area of the second camera device is adjacent to the window layout area of the first camera device. If there are second other camera devices except the second camera device among the first other camera devices, the window layout areas of the second other camera devices are determined on the basis of the video resolution captured by the first camera device, the video resolution captured by the second camera device, and the video resolutions captured by the second other camera devices, which facilitates a reasonable distribution of the display areas of each camera device, reducing display deformation or distortion and improving the display effect.

If there is a second other camera device among the first other camera devices, first determine whether there is a third camera device among the second other camera devices. Where, the vertical video resolution captured by the third camera device is less than or equal to a difference between the vertical video resolution captured by the first camera device and the vertical video resolution captured by the second camera device, and the horizontal video resolution captured by the third camera device is less than or equal to the horizontal video resolution captured by the second camera device.

If there is a third camera device, on the basis of the video resolution captured by the third camera device, a window layout area of the third camera device may be determined. The window layout area of the third camera device is adjacent to the window layout areas of the first camera device and the second camera device.

Referring to the example in FIG.6, after determining the window layout area of the camera device 4, among the remaining type A camera devices, it is determined whether there exists a third camera device that satisfies the condition that the vertical video resolution captured is less than a difference between the vertical video resolution captured by the camera device 1 and the vertical video resolution captured by the camera device 4, and the horizontal video resolution captured is less than or equal to the horizontal video resolution captured by the camera device 4. If such a third camera device exists, a window layout area of the third camera device may be set below the window layout area of camera device 4.

As shown in FIG.6, a camera device 5 satisfies the above conditions: a vertical video resolution captured by the camera device 5 is equal to a difference between the vertical video resolution captured by the camera device 1 and the vertical video resolution captured by the camera device 4, and a horizontal video resolution captured by the camera device 5 is less than the horizontal video resolution captured by the camera device 4. Therefore, a window layout area of the camera device 5 may be determined on the basis of the video resolution captured by the camera device 5. The window layout area of the camera device 5 is located below the window layout area of the camera device 4 and is adjacent to the window layout areas of camera device 3 and camera device 4, respectively.

After determining the window layout area of the third camera device, judge whether there is a third other camera device except the third camera device among the second other camera devices.

When there is a third other camera device except the third camera device among the second other camera devices, a window layout area of the third other camera device is determined on the basis of the video resolution captured by the first camera device, the video resolution captured by the second camera device, the video resolution captured by the third camera device, and the video resolution captured by the third other camera device.

In the embodiment of the present application, the window layout of the third camera device is adjacent to the window layout areas of the first camera device and the second camera device. When there is a third other camera device except the third camera device among the second other camera devices, the window layout area of the third other camera device is determined on the basis of the video resolution captured by the first camera device, the video resolution captured by the second camera device, the video resolution captured by the third camera device, and the video resolution captured by the third other camera device, which facilitates a reasonable distribution of the display areas of each camera device, reducing display deformation or distortion and improving the display effect.

For example, firstly, a candidate area is determined in the layout area on the basis of the video resolution captured by the first camera device, the video resolution captured by the second camera device, the video resolution captured by the third camera device, and the video resolution captured by other third camera devices.

Where the candidate area is an area excluding the window layout area of the third camera device among an area formed by the width of the window layout area of the second camera device and a difference in height between the window layout area of the first camera device and the window layout area of the second camera device. Referring to FIG.6, the candidate area is shown as the shaded area in FIG. 6, i.e., the area excluding the window layout area of the camera device 5 among an area formed by the difference in height between the window layout areas of the camera device 1 and the camera device 4 as a height of the candidate area, and the width of the window layout area of the camera device 4 as a width of the candidate area.

Then, it is determined from the third other camera devices whether there is a fourth camera device, a video resolution captured by which satisfies the candidate area size, and a fifth camera device other than the fourth camera device.

The fourth camera device is a camera device that may be deployed in the candidate area. The number of fourth cameras may be zero or one or more. On the basis of the video resolution captured by the third other camera devices, it may be determined whether there is a fourth camera device that satisfies the candidate area size.

For example, it is determined from the third other camera devices whether there is a camera device, a vertical video resolution captured by which is less than or equal to a difference between the vertical video resolution captured by the first camera device and the vertical video resolution captured by the second camera device, a horizontal video resolution captured by which is less than or equal to a difference between the horizontal video resolution captured by the second camera device and the horizontal video resolution captured by the third camera device. If there is such a camera, it may be determined as the fourth camera device.

As shown in FIG.6, after the window layout area of the camera device 5 is determined, there is only a first other area below the window layout area of the camera device 5, which is only able to be laid out by camera devices, a vertical video resolution captured by which is less than or equal to a difference between the vertical video resolution captured by the camera device 1 and the vertical video resolution captured by the camera device 4, a horizontal video resolution captured by which is less than or equal to a difference between the horizontal video resolution captured by the camera device 4 and the horizontal video resolution captured by the camera device 5.

When there is a fourth camera device, a window layout area of the fourth camera device is determined on the basis of the video resolution captured by the fourth camera device. The window layout area of the fourth camera device is adjacent to the window layout areas of the second and third cameras.

Referring to FIG.6, among the remaining type A camera devices, a camera device 6 satisfies the condition that a vertical resolution of the camera device 6 is less than or equal to a difference between the vertical resolution of the camera device 1 and the vertical resolution of the camera device 4, and a horizontal resolution of the camera device 6 is less than or equal to a difference between the horizontal resolution of the camera device 4 and the horizontal resolution of the camera device 5. Therefore, the window layout area of the camera device 6 is located below the camera device 4, and the window layout area of the camera device 6 is adjacent to the window layout areas of the camera device 4 and the camera device 5.

After determining the window layout area of each fourth camera device, the remaining candidate areas available for arranging camera devices are also updated accordingly. For example, in FIG.6, after determining the window layout area of the camera device 6, the area in the candidate area that may be used to arrange camera devices is the shaded area in FIG.6 minus the window layout area of the camera device 6. Then, it is determined whether any of the remaining third other camera devices may be arranged in the candidate area. If so, it is determined as the fourth camera device, until there are no more camera devices in the remaining third other camera devices that may be arranged in the candidate area.

A fifth camera device is a camera device, a video resolution captured by which does not satisfy the candidate area size requirement, i.e., a camera device except the fourth camera device among the third other camera devices. When there is the fifth camera device, a window layout area of the fifth camera device is determined on the basis of a resolution of the fifth camera device, where the window layout area of the fifth camera device is adjacent to the window layout area of the second camera device.

Referring to FIG.6, after determining the window layout area of the camera device 4, the window layout area of the fifth camera device may be set adjacent to the window layout area of camera device 4. When there are a plurality of fifth cameras, they can be set adjacent to each other in a descending order of the vertical video resolution captured, where the window layout area of the camera device with the highest vertical video resolution captured is set adjacent to the window layout area of the camera device 4. After determining the window layout area of the fifth camera device, there is a corresponding remaining area below the window layout area of the fifth camera device. A height of the remaining area is a difference between the vertical video resolutions captured by the first and fifth camera devices, and a width of the remaining area is equal to the horizontal video resolution captured by the fifth camera device. Then, among the unarranged first type camera devices, it is determined whether there is a camera device, a video resolution captured by which satisfies the remaining area size. If so, its window layout area is set within the remaining area. Where the process of determining whether there is a camera device among the unarranged first type camera devices, a video resolution captured by which satisfies the remaining area size is similar to the process of determining whether there is a fourth camera device among the third other camera devices, a video resolution captured by which satisfies the candidate area size, and is not described in detail herein.

In the embodiment of the present application, the window layout of the fourth camera device is adjacent to the window layout areas of the second and third camera devices, and when there is the fifth camera device, the window layout area of the fifth camera device is determined on the basis of the video resolution captured by the fifth camera device. Furthermore, the window layout area of the fifth camera device is adjacent to the window layout area of the second camera device, which facilitates a reasonable distribution of the display areas of each camera device, reducing display deformation or distortion and improving the display effect.

In the above embodiments, it is described how to determine the window layout area of the first type camera device when at least two camera devices include at least one first type camera device. In some cases, at least two camera devices also include at least one second type camera device, which is a camera device that captures images of a second image size type. The following describes how to determine the window layout area of the second type camera device in conjunction with the accompanying drawings.

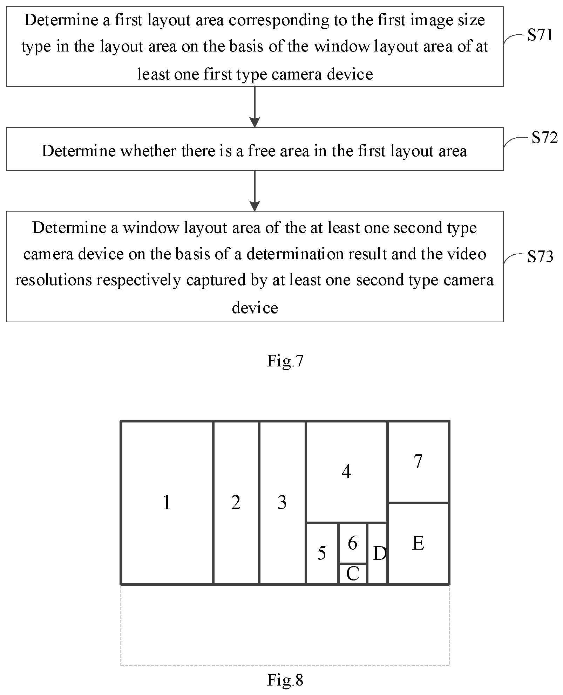

FIG. 7 is a flowchart of determining a window layout area of a second type camera device according to an embodiment of the present application. As shown in FIG.7, the method includes the following.

S71, determine a first layout area corresponding to the first image size type in the layout area on the basis of the window layout area of at least one first type camera device.

The first layout area includes the window layout area of at least one first type camera device.

FIG. 8 is a schematic diagram of a layout area according to an embodiment of the present application. As shown in FIG.8, example of window layout areas for each type A camera device is provided. Therefore, a first layout area corresponding to type A is determined on the basis of a spatial domain of the window layout areas of each type A camera device. Where a height of the first layout area is determined by the vertical video resolution captured by the camera device 1, and the width of the first layout area is determined by the horizontal video resolution captured by camera devices 1, 2, 3, 4, and 7.

S72, determine whether there is a free area in the first layout area.

The free area is an area in the first layout area except the window layout area of at least one type A camera device.

For example, for each window layout area of a type A camera device in the first layout area, if there is an area below the window layout area of a type A camera device that does not include the window layout areas of other camera devices, and the vertical resolution captured by the type A camera device is less than the height of the first layout area, then a target width is determined within the width of the window layout area of that type A camera device, and the area is stretched downwards to the bottom of the first layout area using the target width as an area width, thus obtaining the corresponding free area. Where the target width is the width of the window layout area of the first type camera device, excluding the width of the window layout areas of other camera devices below it.

Referring to FIG.8, there is not window layout area for other camera devices below camera device 6. Therefore, a width of the window layout area of the camera device 6 may be determined as a corresponding target width p. Using p as the area width, it may be stretched downwards to the bottom of the first layout area to obtain the free area C corresponding to the camera device 6. There is an area below the camera device 4 that does not include the window layout areas of other camera devices. Therefore, a width of the window layout area of camera device 4 may be subtracted from the width of the window layout areas of camera device 5 and camera device 6 to obtain a corresponding target width p1. Using p1 as an area width, it may be stretched downwards to the bottom of the first layout area to obtain a free area D corresponding to camera device 4. Similarly, a free area E corresponding to the camera device 7 may be obtained.

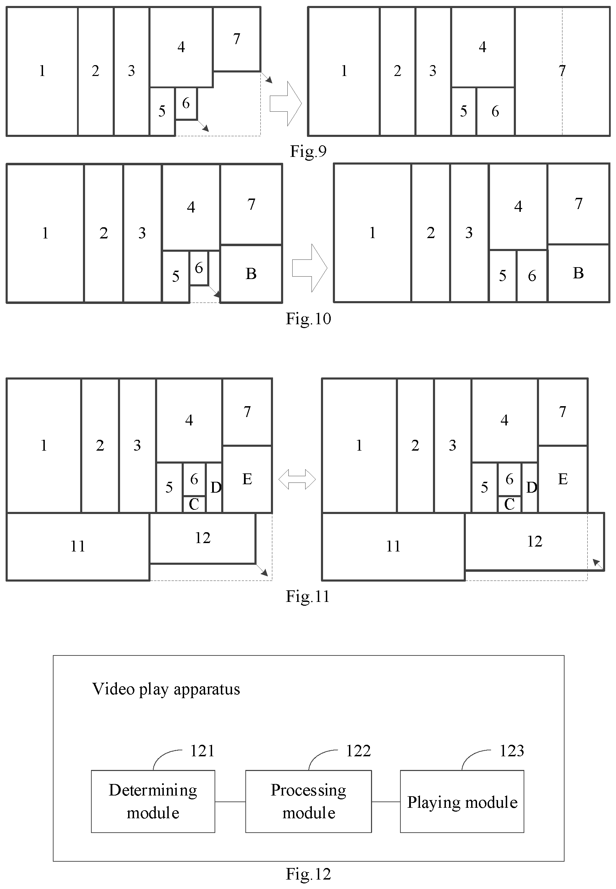

In the absence of a second type camera device, the window layout area of the first type camera device may be stretched, as shown in the example in FIG. 9.

FIG. 9 is a schematic diagram of stretching a window layout area of a first type camera device according to an embodiment of the present application. As shown in FIG.9, the example illustrates how to determine the stretching process for the window layout area of a type A camera device when there are three empty areas (C, D, and E) and there is not type B camera device.

Referring to the example in FIG.9, since there is not type B camera device, for empty areas C and D, the window layout area of the camera device 6 may be stretched proportionally until it reaches a corresponding boundary which includes a bottom of the first layout area or a rightmost edge of the window layout area of the camera device 4 (whichever comes first). If there are still gaps, they may be filled by absorbing frames, so that the window layout area of camera device 6 fills empty areas C and D.

For empty area E, the window layout area of the rightmost camera device 7 may be stretched proportionally.

S73, determine a window layout area of the at least one second type camera device on the basis of a determination result and the video resolutions respectively captured by at least one second type camera device.

The determination result is that there is a free area in the first layout area, or there is not the free area. On the basis of the determination result and the video resolutions respectively captured by the at least one second type camera device, it may be determined whether a sixth camera device and a seventh camera device except there is the sixth camera device from among the at least one second type camera device. In the embodiment of the present application, the sixth camera device is a camera device suitable for setting a corresponding window layout area in the free area, and the seventh camera device is a camera device unsuitable for setting a corresponding window layout area in the free area.

For example, when the determination result is that there is the free area in the first layout area, on the basis of a size of the free area and the video resolution respectively captured by the at least one second type camera device, it is determined whether there is a camera device among the at least one second type camera device that satisfies the size of the free area. If there is a camera device that satisfies the size of the free area, the camera device that satisfies the size of the free area is determined as the sixth camera device, and the camera device except the sixth camera device among the at least one second type camera device is determined as the seventh camera device.

If the determination result is that there is not the free area in the first layout area, it is determined that there is not the sixth camera device among the at least one second type camera device, and the at least one second type camera device is determined to be the seventh camera device.

For example, if the determination result indicates that there is not the empty area in the first layout area, then it is determined that there is not the sixth camera device among at least one second type camera device, and thus all second type camera devices are determined to be seventh camera devices.

If the determination result indicates that there is an empty area in the first layout area, then it is necessary to combine a size of the empty area and the video resolution captured by the second type camera device to determine whether there are a sixth and seventh camera device among at least one second type camera device.

Determining whether there is a sixth camera device among the second type camera devices mainly considers the following two factors:

One factor is whether a difference between the vertical video resolution captured by the second type camera device and a height of the empty area is greater than a first preset threshold. Since the empty area is the area remaining in the first layout area excluding the window layout area of the first type camera device, the size of the empty area is usually relatively small. When the vertical video resolution captured by the second type camera device is high, setting the window layout area of the second type camera device in the empty area does not have a good display effect. Therefore, for any idle area, it may be determined whether there is a camera among at least one second type camera device whose difference between the vertical video resolution captured and the height of the idle area is less than or equal to the first preset threshold.

Another factor is whether a difference between a first aspect ratio of the video captured by the second type camera device and a second aspect ratio of the idle area is greater than a second preset threshold. The aspect ratio of the video captured by the second type camera device may be calculated using the video vertical and horizontal resolutions, and the aspect ratio of the idle area may be calculated using the height and width of the idle area. When the difference between the first and second aspect ratios is greater than the second preset threshold, setting the window layout of the camera device in the idle area results in significant image distortion and poor display quality. Therefore, for any idle area, it may be determined whether there is a camera among at least one second type camera device whose difference between the corresponding first aspect ratio and the second aspect ratio of the idle area is less than or equal to the second preset threshold.

For any empty area, among the second type camera devices, when there is a camera device that satisfies the condition that the difference between the vertical video resolution captured and the height of the empty area is less than or equal to the first preset threshold, and the difference between the corresponding first aspect ratio and the second aspect ratio of the empty area is less than or equal to the second preset threshold, it is determined that at least one of the second type camera devices satisfies the size of the empty area, and the camera device which satisfies the size of the empty area is designated as the sixth camera device. If there are other camera devices except the sixth camera device among the at least one second type camera device, these other camera devices are determined as the seventh camera device.

Then, if there is the sixth camera device among the at least one second type camera device, the empty area is designated as the window layout area of the sixth camera device.

FIG. 10 is a schematic diagram of determining a window layout area of a second type camera device according to an embodiment of the present application. FIG.10 illustrates how to determine a window layout area of a single type B camera when there are three empty areas (C, D, and E).

Referring to the example in FIG.10, among these three empty areas, it is determined whether there is an idle region whose difference between the second aspect ratio corresponding to the idle region and the first aspect ratio corresponding to the type B camera device is less than or equal to the second preset threshold, and whose difference between the height corresponding to the idle region and the vertical video resolution captured by the type B camera device is less than or equal to the first preset threshold. As shown in FIG.10, empty area E satisfies the above conditions, therefore, empty area E is determined as the window layout area of the type B camera device.

For the idle areas C and D, the window layout area of the camera device 6 may be stretched proportionally until the window layout area of the camera device 6 reaches the corresponding boundary, which includes the bottom of the first layout area or the rightmost side of the window layout area of the camera device 4 (whichever is reached first). When gaps remain, they may be filled by absorbing the frames, ensuring that the window layout area of camera device 6 fills empty areas C and D.

When there is a seventh camera device among the at least one second type camera device, the window layout area of the seventh camera device is determined on the basis of the resolution of the seventh camera device.

For the seventh camera device, firstly, a second layout area corresponding to the second image size type is determined within the layout area, and the second layout area is adjacent to the first layout area. Then, on the basis of the video resolution captured by the seventh camera device, a window layout area of the seventh camera device is determined within the second layout area.

FIG. 11 is a schematic diagram of determining a window layout area of a seventh camera device according to an embodiment of the present application. As shown in FIG.11, the seventh camera device includes camera device 11 and camera device 12, with the camera device 12 being the last type B camera device. A vertical video resolution captured by the camera device 11 is greater than a vertical video resolution captured by the camera device 12; therefore, the window layout area of camera device 11 is determined first. The window layout area of the camera device 11 is adjacent to the window layout area of the camera device 1.

Then, the window layout area of the camera device 12 is determined, and the window layout area of the camera device 12 is adjacent to the window layout area of the camera device 11.

In some cases, as shown in the example on the left in FIG.11, when the window layout area of the camera device 12 does not reach the boundary of the second layout area, a first difference between the window layout area of the camera device 12 and the bottom of the second layout area and a second difference between the window layout area of camera device 12 and the rightmost edge of the second layout area may be determined first. The smaller of the first and second differences is used as a reference for proportional stretching, and then the frame is absorbed to the other side. As shown on the left side of FIG.11, the width of the window layout area of the camera device 12 may be supplemented first to align with a rightmost side of the first layout area, and then a height can be supplemented downwards by the same length. Such proportional stretching method does not cause distortion. When the height of the window layout area of the camera device 12 is still not aligned with the height of the window layout area of the camera device 11 after supplementation, it may be stretched downwards until they are aligned. Although such stretching causes some image distortion, the degree of distortion is relatively small.

In some cases, as shown in the example on the right side of FIG.11, the width of the window layout area of the camera device 12 exceeds the boundary of the second layout area, it is necessary to reduce the width of the window layout area of the camera device 12 to match the rightmost side of the first layout area. As shown on the right side of FIG.11, the width of the window layout area of the camera device 12 may be compressed first to align with the rightmost side of the first layout area, and then the frame may be absorbed downwards to align the height of the window layout area of the camera device 12 with the height of the window layout area of the camera device 11. Although such stretching causes some image distortion, the degree of distortion is relatively small.

It should be noted that, for the seventh camera device, the implementation method of determining the window layout area of the seventh camera device in the second layout area is similar to the implementation method of determining the window layout area of the first type camera device in the first layout area, and is not be described herein.

In the embodiment of the present application, when at least two camera devices include at least one second type of camera device, it is determined whether there is a free area in the first layout area corresponding to a first image size type. On the basis of a determination result and the video resolutions respectively captured by the at least one second type camera device, a window layout area of the at least one second type camera device is determined to better utilize the free area and the second layout area, thereby improving a utilization rate of the video play window and enhancing the video display effect.

S33, on the basis of the respective window layout areas of the at least two camera devices and the size of the video play window, determine, from the video play window, the respective pane areas of the at least two camera devices.

After obtaining the respective window layout areas of the at least two camera devices, a ratio between the window layout area of each camera device and the video play window may be determined on the basis of the respective window layout areas of the at least two camera devices and the size of the video play window, and then the pane area of each camera device may be determined on the basis of the ratio.

For example, firstly, a width and a height of the layout area are determined, where the width of the layout area is equal to the sum of the horizontal video resolutions captured by all the topmost first type camera devices within the first layout area. When only first type camera devices are included among the at least two camera devices, the height of the layout area is equal to the vertical video resolution captured by the first camera devices; when first type and second type camera devices are included among the at least two camera devices, the height of the layout area is equal to the vertical video resolution captured by the first camera devices plus the vertical video resolution captured by the leftmost second type camera device.

Taking FIG.11 as an example, the width of the layout area is equal to the sum of the horizontal video resolutions captured by the camera devices 1, 2, 3, 4, and 7, and the height of the layout area is equal to the sum of the vertical video resolutions captured by the camera devices 1 and 7.

After obtaining the height and width of the layout area, a width scaling ratio m and a height scaling ratio n may be obtained by combining them with the size of the video play window. Where m = width of the video play window/width of the layout area, and n = height of the video play window/height of the layout area.

For each camera device, a width of the pane area of the camera device can be obtained on the basis of the width of the window layout area of the camera device and m, and a height of the pane area of the camera device can be obtained on the basis of the height of the window layout area of the camera device and n.

Then, a corresponding coordinate system is established. On the basis of the height and width of the pane area of each camera device, and the relative positional relationship between the pane areas of each camera device, the coordinates of the pane area of each camera device are determined. Then, windows are opened on the basis of the coordinates of the pane area of each camera device, and the video captured by a corresponding camera device is played back in the pane area of each camera device. Where the play mode may be adapted to either proportional play or full-scale play. For example, for each camera device, an error value caused by image stretching may be calculated on the basis of an aspect ratio of the pane area of the camera device and a resolution aspect ratio of the camera device, and compared with a preset error threshold. When the error value is greater than or equal to the preset error threshold, a proportional play mode is selected; when the error value is less than the preset error threshold, the full-scale play mode is selected.

In summary, the solution of the embodiments of the present application classifies camera devices according to an aspect ratio of the video resolution captured by the camera devices, and uses a recursive method to determine a window layout area of each camera device. Empty areas are filled by methods such as equal stretching and scaling, and absolute coordinates of corresponding pane areas after regular arrangements of the window layout areas are calculated. Customized and rational window opening is achieved, and the play mode is adaptive, allowing camera devices with different video resolutions to play videos when the pane area is close to an actual resolution ratio, reducing image distortion of videos, improving a utilization rate of the play pane, and enhancing the video display effect.

A video play apparatus provided by the present application is described below. The video play apparatus described below may be referred to in correspondence with the video play method described above.

FIG. 12 is a structural schematic diagram of a video play apparatus according to an embodiment of the present application. As shown in FIG.12, the apparatus includes:
a determining module 121 configured to determine a size of a video play window and video resolutions respectively captured by at least two camera devices for playing videos by means of the video play window;
a processing module 122 configured to, on the basis of the video resolutions respectively captured by the at least two camera devices and the size of the video play window, determine, from the video play window, respective pane areas of the at least two camera devices; and
a play module 123 configured to play, in each pane area, a video captured by a corresponding camera device.

In an embodiment, the processing module 122 may be configured to:
for each camera device, determine an image size type captured by the camera device on the basis of the video resolution captured by the camera device;
on the basis of the video resolutions respectively captured by the at least two camera devices and the image size type, determine respective window layout areas of the at least two camera devices in a layout area corresponding to the video play window; and
on the basis of the respective window layout areas of the at least two camera devices and the size of the video play window, determine, from the video play window, the respective pane areas of the at least two camera devices.

In an embodiment, the at least two camera devices include at least one first type camera device, which is a camera device for capturing a first image size type. The processing module 122 may be configured to:
determine a respective window layout area of the at least one first type camera device in the layout area, starting from a first position in the layout area, in a descending order of vertical video resolutions respectively captured by the at least one first type camera device.

In an embodiment, the processing module 122 may be configured to:
determine a window layout area of a first camera device among the at least one first type camera device that captures videos with a highest vertical resolution, where the window layout area of the first camera device is located at the first position;
when there is a first other camera device except the first camera device among the at least one first type camera device, determine a second camera device among the first other camera devices that captures videos with a second highest vertical resolution;
determine a window layout area of the second camera device on the basis of a video resolution captured by the second camera device, where the window layout area of the second camera device is adjacent to the window layout area of the first camera device; and
when there is a second other camera device except the second camera device among the first other camera devices, determine a window layout area of the second other camera device on the basis of a video resolution captured by the first camera device, the video resolution captured by the second camera device, and a video resolution captured by the second other camera device.

In an embodiment, when there are a plurality of first camera devices, the processing module 122 may be configured to:
determine respective window layout areas of the plurality of first camera devices according to respective horizontal video resolutions of the plurality of first camera devices.

In an embodiment, the processing module 122 may be configured to:
determine whether there is a third camera device among the second other camera devices, where a vertical video resolution captured by the third camera device is less than or equal to a difference between a vertical video resolution captured by the first camera device and a vertical video resolution captured by the second camera device, and a horizontal video resolution captured by the third camera device is less than or equal to a horizontal video resolution captured by the second camera device;
when there is the third camera device, determine a window layout area of the third camera device on the basis of a video resolution captured by the third camera device, where the window layout area of the third camera device is adjacent to the window layout area of the first camera device and the window layout area of the second camera device; and
when there is a third other camera device except the third camera device among the second other camera devices, determine a window layout area of the third other camera device on the basis of the video resolution captured by the first camera device, the video resolution captured by the second camera device, the video resolution captured by the third camera device, and a video resolution captured by the third other camera device.

In an embodiment, the processing module 122 may be configured to:
determine from the third other camera devices whether there is a fourth camera device, a video resolution captured by which satisfies a candidate area size, and a fifth camera device except the fourth camera device, where the candidate area is an area excluding the window layout area of the third camera device among an area formed by a width of the window layout area of the second camera device and a difference between a height of the window layout area of the first camera device and a height of the window layout area of the second camera device;
when there is the fourth camera device, determine a window layout area of the fourth camera device on the basis of a video resolution captured by the fourth camera device, where a window layout area of the fourth camera device is adjacent to the window layout area of the second camera device and the window layout area of the third camera device; and
when there is the fifth camera device, determine a window layout area of the fifth camera device on the basis of a video resolution captured by the fifth camera device, where a window layout area of the fifth camera device is adjacent to the window layout area of the second camera device.

In an embodiment, the at least two camera devices further include at least one second type camera device which is a camera device for capturing a second image size type, the processing module 122 may be configured to:
determine a first layout area corresponding to the first image size type in the layout area on the basis of the respective window layout area of the at least one first type camera device;
determine whether there is a free area in the first layout area; and
determine a window layout area of the at least one second type camera device on the basis of a determination result and video resolutions respectively captured by the at least one second type camera device.

In an embodiment, the processing module 122 may be configured to:
determine, on the basis of the determination result and the video resolutions respectively captured by the at least one second type camera device, whether there is a sixth camera device and a seventh camera device except the sixth camera device among the at least one second type camera device;
when there is the sixth camera device among the at least one second type camera device, determine the free area as a window layout area of the sixth camera device; and
when there is the seventh camera device among the at least one second type camera device, determine a window layout area of the seventh camera device on the basis of a video resolution captured by the seventh camera device.

In an embodiment, the processing module 122 may be configured to:
when the determination result indicates that there is the free area in the first layout area, determine whether there is a camera device satisfying a free area size among the at least one second type camera device on the basis of the free area size and the video resolutions respectively captured by the at least one second type camera device, when there is the camera device satisfying the free area size, determining the camera device satisfying the free area size as the sixth camera device, and determining a camera device except the sixth camera device among the at least one second type camera device as the seventh camera device; and
when the determination result indicates that there is not the free area in the first layout area, determine that there is not the sixth camera device among the at least one second type camera device, and determining the at least one second type camera device as the seventh camera device.

In an embodiment, the processing module 122 may be configured to:
determine a second layout area corresponding to the second image size type within the layout area, where the second layout area is adjacent to the first layout area; and
determine the window layout area of the seventh camera device within the second layout area on the basis of the video resolution captured by the seventh camera device.

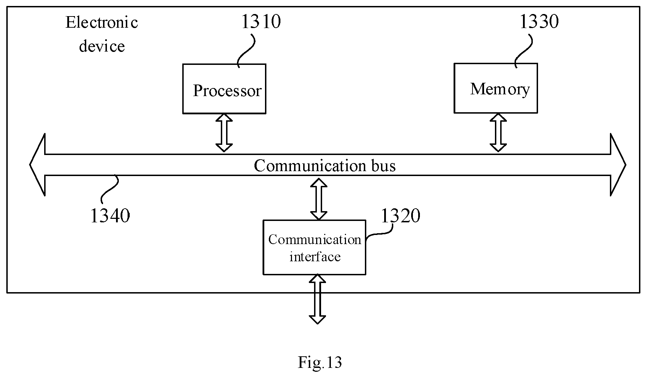

FIG.13 illustrates a schematic diagram of a physical structure of an electronic device. As shown in FIG.13, the electronic device may include: a processor 1310, a communication interface 1320, a memory 1330, and a communication bus 1340, where the processor 1310, the communication interface 1320, and the memory 1330 communicate with each other through the communication bus 1340. The processor 1310 may call logical instructions in the memory 1330 to execute a video play method, including: determining a size of a video play window and video resolutions respectively captured by at least two camera devices for playing videos by means of the video play window; on the basis of the video resolutions respectively captured by the at least two camera devices and the size of the video play window, determining, from the video play window, respective pane areas of the at least two camera devices; and playing, in each pane area, a video captured by a corresponding camera device.

Furthermore, the logical instructions in the aforementioned memory 1330 may be implemented as software functional units and when sold or used as independent products, may be stored in a computer-readable storage medium. On the basis of such understanding, the technical solution of this application, in essence, or the part that contributes to the prior art, or a part of the technical solution, may be embodied in the form of a software product. The computer software product is stored in a storage medium and includes several instructions to cause a computer device (which may be a personal computer, server, or network device, etc.) to execute all or part of the steps of the method described in each embodiment of the present application. The aforementioned storage medium includes various media capable of storing program code, such as USB flash drives, portable hard drives, read-only memory (ROM), random access memory (RAM), magnetic disks, or optical disks.

The present application also provides a computer program product, which includes a computer program that may be stored on a computer-readable storage medium. When the computer program is executed by a processor, the computer is able to execute the video play method provided by each of the above methods. The method includes: determining a size of a video play window and video resolutions respectively captured by at least two camera devices for playing videos by means of the video play window; on the basis of the video resolutions respectively captured by the at least two camera devices and the size of the video play window, determining, from the video play window, respective pane areas of the at least two camera devices; and playing, in each pane area, a video captured by a corresponding camera device.

The present application also provides a computer-readable storage medium having a computer program stored thereon, which, when executed by a processor, is implemented to perform the video play method provided by each of the above methods, the method including: determining a size of a video play window and video resolutions respectively captured by at least two camera devices for playing videos by means of the video play window; on the basis of the video resolutions respectively captured by the at least two camera devices and the size of the video play window, determining, from the video play window, respective pane areas of the at least two camera devices; and playing, in each pane area, a video captured by a corresponding camera device.

The apparatus embodiments described above are merely illustrative. The units described as separate components may or may not be physically separate, and the components shown as units may or may not be physical units, i.e., they may be located at one place or distributed across multiple network units. Some or all of the modules can be selected to achieve the purpose of the solutions of the present embodiment according to actual needs. Those skilled in the art may understand and implement them without creative efforts. Through the above description of the embodiments, those skilled in the art may clearly understand that each embodiment may be implemented by means of software plus necessary general-purpose hardware platforms, or of course, by hardware. On the basis of such understanding, the above technical solutions, in essence or parts that contribute to the prior art, may be embodied in the form of a software product. The computer software product may be stored in a computer-readable storage medium, such as ROM/RAM, magnetic disk, optical disk, etc., including several instructions to cause a computer device (which may be a personal computer, server, or network device, etc.) to execute the methods described in each embodiment or some parts of the embodiments. Finally, it should be noted that the above embodiments are only used to illustrate the technical solutions of the present application, and are not intended to limit them. Although the present application has been described in detail with reference to the foregoing embodiments, those skilled in the art should understand that modifications may still be made to the technical solutions described in each of the foregoing embodiments, or equivalent substitutions may be made to some of the technical features. Such modifications or substitutions do not cause the essence of the corresponding technical solutions to deviate from the scope of the technical solutions of each embodiment of the present application.

## Claims

1. A video play method, comprising:
determining a size of a video play window and video resolutions respectively captured by at least two camera devices for playing videos by means of the video play window;
on the basis of the video resolutions respectively captured by the at least two camera devices and the size of the video play window, determining, from the video play window, respective pane areas of the at least two camera devices; and
playing, in each pane area, a video captured by a corresponding camera device.

2. The method of claim 1, wherein on the basis of the video resolutions respectively captured by the at least two camera devices and the size of the video play window, determining, from the video play window, the respective pane areas of the at least two camera devices, comprises:
for each camera device, determining an image size type captured by the camera device on the basis of the video resolution captured by the camera device;
on the basis of the video resolutions respectively captured by the at least two camera devices and the image size type, determining respective window layout areas of the at least two camera devices in a layout area corresponding to the video play window; and
on the basis of the respective window layout areas of the at least two camera devices and the size of the video play window, determining, from the video play window, the respective pane areas of the at least two camera devices.

3. The method of claim 2, wherein the at least two camera devices comprise at least one first type camera device which is a camera device for capturing a first image size type, and on the basis of the video resolutions respectively captured by the at least two camera devices and the image size type, determining the respective window layout areas of the at least two camera devices in the layout area corresponding to the video play window, comprises:
determining a respective window layout area of the at least one first type camera device in the layout area, starting from a first position in the layout area, in a descending order of vertical video resolutions respectively captured by the at least one first type camera device.

4. The method of claim 3, wherein determining the respective window layout area of the at least one first type camera device in the layout area, starting from the first position in the layout area, in the descending order of the vertical video resolutions respectively captured by the at least one first type camera device, comprises:
determining a window layout area of a first camera device among the at least one first type camera device that captures videos with a highest vertical resolution, wherein the window layout area of the first camera device is located at the first position;
when there is a first other camera device except the first camera device among the at least one first type camera device, determining a second camera device among the first other camera devices that captures videos with a second highest vertical resolution;
determining a window layout area of the second camera device on the basis of a video resolution captured by the second camera device, wherein the window layout area of the second camera device is adjacent to the window layout area of the first camera device; and
when there is a second other camera device except the second camera device among the first other camera devices, determining a window layout area of the second other camera device on the basis of a video resolution captured by the first camera device, the video resolution captured by the second camera device, and a video resolution captured by the second other camera device.

5. The method of claim 4, wherein when there are a plurality of first camera devices, determining the window layout area of the first camera device among the at least one first type camera device that captures videos with the highest vertical resolution, comprises:
determining respective window layout areas of the plurality of first camera devices according to respective horizontal video resolutions of the plurality of first camera devices.

6. The method of claim 4, wherein determining the window layout area of the second other camera device on the basis of the video resolution captured by the first camera device, the video resolution captured by the second camera device, and the video resolution captured by the second other camera device, comprises:
determining whether there is a third camera device among the second other camera devices, wherein a vertical video resolution captured by the third camera device is less than or equal to a difference between a vertical video resolution captured by the first camera device and a vertical video resolution captured by the second camera device, and a horizontal video resolution captured by the third camera device is less than or equal to a horizontal video resolution captured by the second camera device;
when there is the third camera device, determining a window layout area of the third camera device on the basis of a video resolution captured by the third camera device, wherein the window layout area of the third camera device is adjacent to the window layout area of the first camera device and the window layout area of the second camera device; and
when there is a third other camera device except the third camera device among the second other camera devices, determining a window layout area of the third other camera device on the basis of the video resolution captured by the first camera device, the video resolution captured by the second camera device, the video resolution captured by the third camera device, and a video resolution captured by the third other camera device.

7. The method of claim 6, wherein determining the window layout area of the third other camera device on the basis of the video resolution captured by the first camera device, the video resolution captured by the second camera device, the video resolution captured by the third camera device, and the video resolution captured by the third other camera device, comprises:
determining from the third other camera devices whether there is a fourth camera device, a video resolution captured by which satisfies a candidate area size, and a fifth camera device except the fourth camera device, wherein the candidate area is an area excluding the window layout area of the third camera device among an area formed by a width of the window layout area of the second camera device and a difference between a height of the window layout area of the first camera device and a height of the window layout area of the second camera device;
when there is the fourth camera device, determining a window layout area of the fourth camera device on the basis of a video resolution captured by the fourth camera device, wherein a window layout area of the fourth camera device is adjacent to the window layout area of the second camera device and the window layout area of the third camera device; and
when there is the fifth camera device, determining a window layout area of the fifth camera device on the basis of a video resolution captured by the fifth camera device, wherein a window layout area of the fifth camera device is adjacent to the window layout area of the second camera device.

8. The method of any of claims 3 to 7, wherein the at least two camera devices further comprise at least one second type camera device which is a camera device for capturing a second image size type, and on the basis of the video resolutions respectively captured by the at least two camera devices and the image size type, determining the respective window layout areas of the at least two camera devices in the layout area corresponding to the video play window, comprises:
determining a first layout area corresponding to the first image size type in the layout area on the basis of the respective window layout area of the at least one first type camera device;
determining whether there is a free area in the first layout area; and
determining a window layout area of the at least one second type camera device on the basis of a determination result and video resolutions respectively captured by the at least one second type camera device.

9. The method of claim 8, wherein determining a window layout area of the at least one second type camera device on the basis of a determination result and video resolutions respectively captured by the at least one second type camera device, comprises:
determining, on the basis of the determination result and the video resolutions respectively captured by the at least one second type camera device, whether there is a sixth camera device and a seventh camera device except the sixth camera device among the at least one second type camera device;
when there is the sixth camera device among the at least one second type camera device, determining the free area as a window layout area of the sixth camera device; and
when there is the seventh camera device among the at least one second type camera device, determining a window layout area of the seventh camera device on the basis of a video resolution captured by the seventh camera device.

10. The method of claim 9, wherein determining, on the basis of the determination result and the respective video resolution of the at least one second type camera device, whether a sixth camera device and a seventh camera device besides the sixth camera device exist among the at least one second type camera device, comprises:
when the determination result indicates that there is the free area in the first layout area, determining whether there is a camera device satisfying a free area size among the at least one second type camera device on the basis of the free area size and the video resolutions respectively captured by the at least one second type camera device, when there is the camera device satisfying the free area size, determining the camera device satisfying the free area size as the sixth camera device, and determining a camera device except the sixth camera device among the at least one second type camera device as the seventh camera device; and
when the determination result indicates that there is not the free area in the first layout area, determining that there is not the sixth camera device among the at least one second type camera device, and determining the at least one second type camera device as the seventh camera device.

11. The method of claim 9, wherein determining the window layout area of the seventh camera device on the basis of the video resolution captured by the seventh camera device, comprises:
determining a second layout area corresponding to the second image size type within the layout area, wherein the second layout area is adjacent to the first layout area; and
determining the window layout area of the seventh camera device within the second layout area on the basis of the video resolution captured by the seventh camera device.

12. A video play apparatus, comprising:
a determining module configured to determine a size of a video play window and video resolutions respectively captured by at least two camera devices for playing videos by means of the video play window;
a processing module configured to, on the basis of the video resolutions respectively captured by the at least two camera devices and the size of the video playback window, determine, from the video playback window, respective pane areas of the at least two camera devices; and
a playing module configured to play, in each pane area, a video captured by a corresponding camera device.

13. An electronic device, comprising a memory, a processor, and a computer program stored in the memory and executable on the processor, wherein the processor, when executing the program, implements the video play method of any of claims 1 to 11.
